(19)

**Europäisches Patentamt**

**European Patent Office**

**Office européen des brevets**

(11) **EP 1 569 186 A1**

(12) **EUROPEAN PATENT APPLICATION**

(43) Date of publication:
**31.08.2005 Bulletin 2005/35**

(51) Int Cl.⁷: **G09B 19/16**, G09B 9/05

(21) Application number: **05002536.0**

(22) Date of filing: **07.02.2005**

| (84) Designated Contracting States:<br>**AT BE BG CH CY CZ DE DK EE ES FI FR GB GR**<br>**HU IE IS IT LI LT LU MC NL PL PT RO SE SI SK TR**<br>Designated Extension States:<br>**AL BA HR LV MK YU** | (72) Inventors:<br>• **Sawada, Yasuhiro**<br>  **K.K. Honda Gijutsu Kenkyusho**<br>  **Wako-shi Saitama (JP)**<br>• **Kuroda, Mitsuhide**<br>  **K.K. Honda Gijutsu Kenkyusho**<br>  **Wako-shi Saitama (JP)** |
|---|---|
| (30) Priority: **26.02.2004 JP 2004051923** | |
| (71) Applicant: **HONDA MOTOR CO., Ltd.**<br>**Tokyo (JP)** | (74) Representative: **Rupp, Christian et al**<br>**Mitscherlich & Partner**<br>**Patent- und Rechtsanwälte**<br>**Sonnenstrasse 33**<br>**80331 München (DE)** |

(54) **A road traffic simulation apparatus**

(57) A technique for simulating natural behaviors of moving objects (30) is provided. A road traffic simulation apparatus includes a simulation unit (14) for performing a traffic simulation, a display unit (16) for displaying a progress status of the traffic simulation and a control unit (12) for controlling the simulation unit (14). The simulation unit (14) has a traffic environment database (20) and a moving object model (30). The moving object model (30) has a driver model (32) in which a driving operation of a driver is modeled and a vehicle dynamics model in which a vehicle behavior is modeled. The driver model (32) performs different processes in parallel in respective different cycles. The results of each cycle process are integrated and output to the vehicle dynamics model (34).

FIG.5

**Description**

The present invention relates to a road traffic simulator for performing a simulation of road traffic by operating autonomously on a computer a virtual vehicle that simulates a real vehicle behavior in a simulated road environment.

In a typical conventional micro traffic simulation apparatus, speed of a vehicle is calculated to update the location of the vehicle according to such detailed rules as: (1) when there is no other vehicle in front of the subject vehicle, the subject vehicle travels freely according to the speed set for the vehicle or the lane; (2) when there is another vehicle, an obstacle or a traffic signal in front of the subject vehicle, the subject vehicle accelerates, decelerates or stops in accordance with the speed or distance relative to such an object before it; and (3) when making a turn, passing an obstacle or changing lanes, the subject vehicle takes a predetermined behavior as long as the relation with the opposite vehicle, the obstacle or the like is in conformance with a predetermined condition.

However, such a typical micro traffic apparatus has a problem that it cannot reproduce such phenomenon that may arise in an actual traffic environment. Vehicles may exhibit strange behaviors. For example, vehicles can never make a turn or change lanes when no concession and cut-in take place. In order to resolve such problems, there have been proposed several solutions in the prior art.

Japanese Patent Application Publication (Kokai) No. 11-144183 discloses a method for realizing a right or left turn and merging. In order to resolve a problem that a vehicle under simulation can never make a turn when there is a continuous traffic of oncoming vehicles, a rule is set that an oncoming straight-going vehicle checks existence of a turning vehicle before it enters a crossing and decreases a speed for allowing a turning vehicle make a turn. The straight-going vehicle enters the crossing after the turning vehicle has made the turn.

Besides, when a vehicle under simulation tries to merge with a through lane from a merging lane, the vehicle may never make such merging when there is a traffic jam with narrow vehicle-to-vehicle distances in the through lane. In order to resolve such problems, the above identified reference uses a rule that a vehicle running through a lane checks existence of another vehicle stopping to wait at a merging point and when it recognizes such a vehicle, the subject vehicle permit the waiting vehicle to merge when the speed of the subject vehicle is equal to or less than a predetermined speed and waits until merging is made.

Japanese Patent Application Publication (Kokai) No. 11-144184 discloses a method for avoiding obstacles. A vehicle running along a lane on a road having two lanes in either direction may pass an obstacle located ahead when a distance between the subject vehicle and a vehicle running along the adjacent lane is larger than a predetermined distance to allow the subject vehicle to move into the adjacent lane and avoid the obstacle. When a subject vehicle runs along a lane following another vehicle running ahead, the vehicle to follow is temporarily changed to a vehicle running ahead in the adjacent lane when there is a sufficient space on a lateral direction for two vehicles to run in parallel.

In addition, when a subject vehicle recognizes a vehicle that is waiting to pass an obstacle, the subject vehicle allows that vehicle to pass the obstacle if the subject vehicle can slow down without hampering following vehicles, thereby allowing that vehicle to pass the obstacle.

Japanese Patent Application Publication (Kokai) No. 8-194882 discloses a method for yielding right-of-way to another vehicle. In order to produce a situation in which a vehicle running in lane 2 of two lanes in one direction allows a vehicle running in lane 1 to change the lanes from 1 to 2, the subject vehicle running in the lane 1 determines to which vehicle among the vehicles running in the lane 2 the subject vehicle should give the way. The subject vehicle slows down when it gives the way.

Japanese patent 3316919 discloses a traffic control simulation system wherein hampering objects are respectively given values and travel behavior of a vehicle is determined based on a calculation using those values.

A real traffic community includes various elements such as road facilities, traffic infrastructures, and rules including regulations and manners enforced in that community, various moving objects including trucks, passenger cars and two-wheeled vehicles as well as the weather and atmosphere (for example, tendency to hurry in the weekday morning). Because the number of elements is very large, they cannot be fully enumerated.

The above-referenced three prior art references realize a more natural behavior of moving objects by adding to a micro traffic simulator certain rules for coping with respective conditions in order to have the micro traffic simulator produce natural situations and behaviors which may be observed in the real traffic community. However, there is a limitation in presuming the conditions in advance and creating appropriate rules for moving objects to perform natural behaviors in accordance with the presumed conditions.

Thus, it is an objective of the present invention to provide a method of simulating more natural behaviors of moving objects without establishing such individual conditions and corresponding rules as established in conventional techniques.

The present invention provides a road traffic simulation apparatus having a simulation unit for performing a traffic simulation, a display unit for displaying a progress status of the traffic simulation and a control unit for controlling the simulation unit. The simulation unit has a traffic environment database and a moving object model. The moving object model has a driver model in which a driving operation of a driver is modeled and vehicle dynamics model in which a vehicle behavior is modeled. The driver model performs different processes in parallel in respective different cycles.

According to one aspect of the invention, the traffic environment database includes road data, traffic sign data and connection data. The road data include physical street information including at least one of width and length of a traffic lane, a friction coefficient of a road surface, types of a roadway and a walkway and a traveling direction. The traffic sign data have at least one of a regulation including a signal, a railway crossing, speed regulations, traveling direction regulation and a stop sign and a location/type of a lane marking, a median stripe and a pedestrian crossing. The connection data have connection information about roads. The information in the traffic environment database is dynamically recognized by each of the plurality of moving objects during a runtime of the traffic simulation.

According to another aspect of the invention, the driver model performs in parallel a long cycle process in which a driving operation is performed in a long period with a low update rate, an intermediate cycle process in which a driving operation is performed in a shorter period than the long period process with an intermediate update rate and a short cycle process in which a driving operation is performed in a shorter period than the intermediate period process with a high update rate. The results of the cycle processes are integrated to produce an output to the vehicle dynamics model.

The driver model uses a travel difficulty which unitary indicates traffic environment around a subject moving object and traffic situations involving other moving objects around the subject moving object. The travel difficulty is reflected in the driver's operation. Travel difficulty is a parameter indicating difficulty of traveling. This parameter unitary indicates state of traffic comprising the traffic environment around a subject moving object and traffic situation involving other moving objects around the subject moving object. The travel difficulty is reflected in the driving operations. More specifically, the travel difficulty is produced in association with at least one of information about traveling lanes, information about stop regulations and information about surrounding moving objects.

According to a further aspect of the invention, areas for determining travel difficulty are produced by at least one of a lane TD (travel difficulty) area generating unit, a stop-sign TD area generating unit and an other-moving object TD area generating unit and are integrated by a TD area integrating unit.

According to yet further aspect of the invention, the driver model further includes an upper speed limit estimating unit for estimating an upper speed limit at the current time based on the traffic situations generated by the other moving objects around the subject moving object.

According to yet further aspect of the invention, the travel difficulty is produced based on each element of the road traffic environment around the subject moving object and the traffic situations generated by the other moving objects around the subject moving object.

According to further aspect of the invention, the travel difficulty includes a travel hampering degree indicating a degree of difficulty in traveling and a travel inducing degree indicating a target driving operation. The travel hampering degree is a positive value of the travel difficulty and the travel inducing degree is a negative value of the travel difficulty.

According to further aspect of the invention, the vehicle dynamics model is a high freedom model having a sufficient precision for use in a driving simulator. At least one moving object model can be replaced by the driving simulator.

According to the present invention, the driver model is structured to perform processes of different periods hierarchically and in parallel, thereby producing various driving behaviors. This allows simulation of driving behaviors, which a human may perform in different cycles such as, selection of a traffic lane considering a route, and operating an accelerator or a steering wheel in response to situations in front of the car. Besides, natural behaviors of moving objects can be realized without pre-establishing detailed rules.

Further, according to the present invention, changes in the traffic environment can be dynamically expressed because the traffic environment is expressed by dynamic TD areas.

Besides, not only driving behaviors but also personality of the driver in various situations occurring in the traffic environment can be observed because each driver model has its unique parameters and the travel hampering and inducing areas are dynamically produced for each moving object.

Figure 1 shows a block diagram of a nano-traffic simulator in accordance with one embodiment of the present invention.
Figure 2 shows a structure of a simulation unit.
Figure 3 is a flowchart of an overall process of the nano-traffic simulator.
Figure 4 shows exemplary data of the traffic environment database.
Figure 5 shows a block diagram of a driver model.
Figure 6 shows an example for establishing a route and selecting a traveling lane by using the traffic environment database.
Figure 7 show an example of a range in which the traffic conditions are detected in the traffic environment recognizing unit.

Figure 8 shows an example of a traffic-lane TD area produced at the time of changing lanes.

Figure 9 shows an example of a traffic-lane TD area produced at the time of turning right.

Figure 10 shows an example of a stop-sign TD area in association with a signal.

Figure 11 shows an example of an other-vehicle TD area in association with a parking vehicle.

Figure 12 shows an example of an other-vehicle TD area in association with a running vehicle.

Figure 13 shows an example of a speed view and a direction view.

Figure 14 shows an example of extraction of TD areas.

Figure 15 shows an example of an apparent travel difficulty distribution.

Figure 16 shows an example of extraction of TD areas at the time of stopping at a pedestrian crossing.

Figure 17 shows an example of an apparent travel difficulty distribution when a travel inducing degree is introduced.

Figure 18 shows a difference between a first embodiment and a second embodiment for a driver model.

Figure 19 shows a searching range for the apparent travel difficulty for the speed in accordance with the second embodiment.

Preferred embodiments of the present invention will now be described with reference to the accompanying drawings.

<u>1. Overall structure</u>

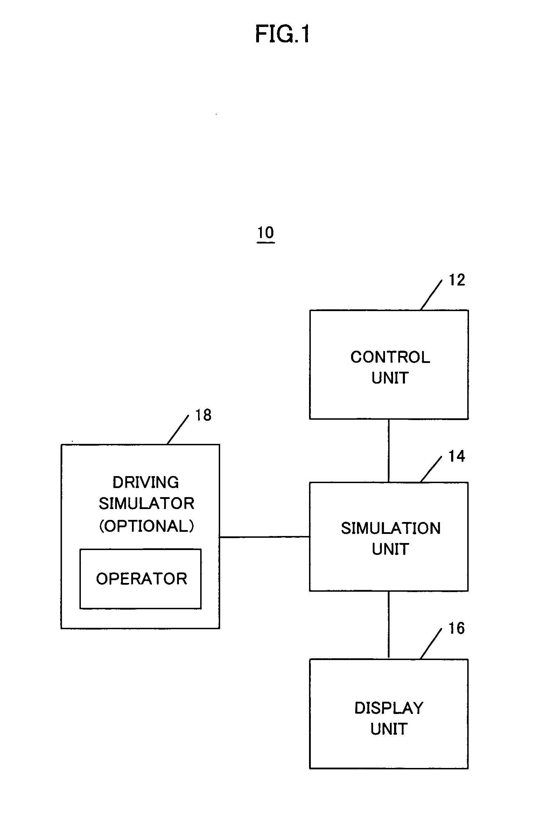

Figure 1 shows a functional block diagram of a road traffic simulation apparatus 10 in accordance with one embodiment of the present invention. In the following description, the road traffic simulation apparatus in accordance with the present invention will be referred to as a "nano-traffic simulator" in order to distinguish it from conventional micro traffic simulators. The nano-traffic simulator 10 expresses, on a computer, a plurality of moving objects (such as four-wheeled vehicles, two-wheeled vehicles or the like) as well as road traffic environment (including roadways, walkways, buildings, signals or the like) and computes the behaviors (such as location, speed, acceleration or the like) of the plurality of the moving objects traveling in the road traffic environment, so as to simulate state of traffic that may take place in association with the moving objects. The nano-traffic simulator 10 includes a control unit 12, a simulation unit 14 and a display unit 16.

The control unit 12 controls such operation as start and stop of the road traffic simulation that is performed in the simulation unit 14. The control unit 12 further controls switching operations for various conditions in the simulation unit 14 and it also controls various parameters regarding the locations where multiple moving objects should be produced, the number of the vehicles to be produced and/or the generation timing.

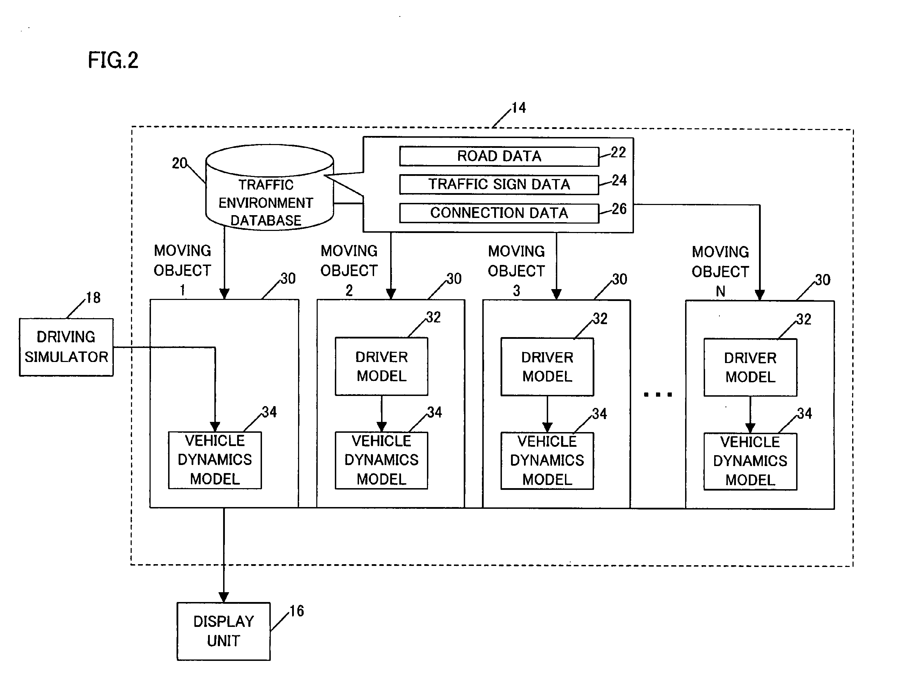

The simulation unit 14 computes in a predetermined time period the behaviors of the multiple moving objects which travel in the road traffic environment that is virtually expressed on the computer and determines the locations and/or the speeds of the moving objects in the road traffic environment. The structure of the simulation unit 14 will be described later with reference to Figure 2.

The display unit 16 displays such road traffic environment as shapes of roads and buildings, operating conditions of traffic signs, signals or the like by using a two-dimension figure, three-dimension projection chart or the like. The display unit 16 also displays each of the moving objects at the respective locations computed by the simulation unit 14.

The nano-traffic simulator 10 is used specifically to simulate the flow of the traffic and the traffic jam prediction under various traffic environments (for example, at a road crossing or in the vicinity of a tollgate in an expressway) by running the multiple moving objects individually and autonomously in such traffic environments.

A driving simulator 18 may be optionally incorporated into the nano-traffic simulator 10. The driving simulator 18 is provided with control input devices for the usual four-wheeled or two-wheeled vehicles such as a steering wheel, an accelerator pedal, a braking pedal or the like. A display device such as a screen is provided in front of an operator of the driving simulator 18 in order to display a three-dimensional picture that simulates a scene that is expected to be seen by a virtual driver of a specific moving object among the multiple moving objects simulated in the nano-traffic simulator 10 (sounds and motions are also produced in synchronization with the pictures). This specific moving object is assigned by an operator of the driving simulator 18. The operator looks over the scene and operates such control input device as the steering wheel, the accelerator pedal, the braking pedal and so on in order to control the movement of the moving object. Analog signals obtained from the control input devices are converted to digital signals and then provided to the simulation unit 14.

By incorporating the driving simulator 18 into the nano-traffic simulator 10, the operator of the driving simulator 18 can participate in a virtual road traffic environment that is computed by the simulation unit 14. Furthermore, more realistic driving training can be performed through use of the driving simulator 18. The driving simulator 18 can be also applied to some games.

Figure 2 shows a functional block diagram of the simulation unit 14. The simulation unit 14 includes a traffic environment database 20 and a plurality of moving object models 30. The traffic environment database 20 includes road data 22, traffic sign data 24 and connection data 26. The number of the moving object models 30 to be produced is equal to the number of the moving objects which are intended to appear in the road traffic environment. In the example of Figure 2, N (1,2, ...,N) moving object models 30 are produced. Each of these moving object models appears or disappears at any time in accordance with its inflow into or outflow from the road traffic environment.

Each of the moving object models 30 contains a driver model 32 and a vehicle dynamics model 34. In a driver model 32, driving operation by a virtual driver is modeled. On the other hand, in a vehicle dynamics model 34, physical behavior of each moving object is modeled. Thus, each moving object is provided with a respective driver model and a respective vehicle dynamics model, so that the nano-traffic simulator 10 in accordance with the present invention allows each moving object appearing in the road traffic environment to take complicated behavior as if it were operated by a human driver having personality. The driver model 32 will be described later with reference to the accompanying drawings.

The vehicle dynamics model 34 has a high degree of freedom as in the conventional driving simulators and is represented by the locations and the Euler angles of the vehicles in a coordinate system. Such vehicle dynamics model itself is known in the art (for example, it is described in the Japanese Patent Publication No. HEI11-272158), so the vehicle dynamics model will not be described here in depth.

When the driving simulator 18 is incorporated into the nano-traffic simulator 10, an input of an operator of the driving simulator becomes an input to a vehicle dynamics model 34 for one of the moving object models 30. In Figure 2, the moving object 1 is operated by the operator of the driving simulator 18. Since each moving object is thus associated with a respective driver model, the operator of the driving simulator can easily participate in the road traffic environment by substituting the input from the external operator with the driver model. Of course, the driver models 32 in the multiple mobile models 30 may be substituted by the input from the external operator.

The nano-traffic simulator 10 is specifically implemented through a computer having a CPU, a ROM, a RAM etc. as well as a display device for displaying simulation results. When the nano-traffic simulator 10 has the driving simulator 18, the display device of the driving simulator 18 may be substituted for the display unit 16. Besides, the nano-traffic simulator 10 may be implemented in a structure of a distributed system where the control unit 12, the simulation unit 14 and the display unit 16 may perform data exchanges each other using a known communication protocol.

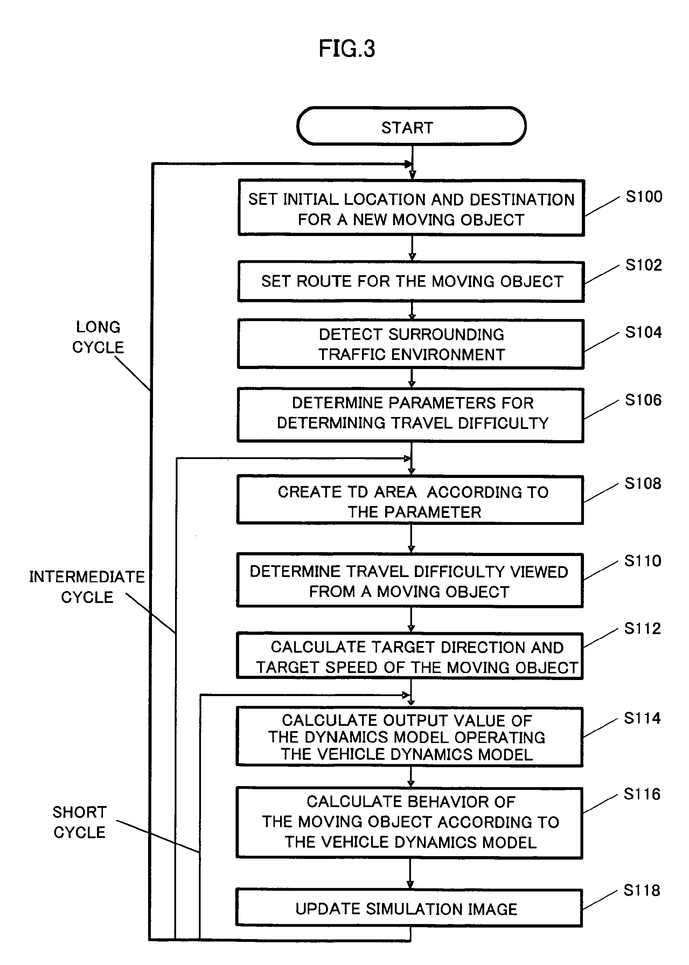

Figure 3 is a flowchart showing an outline of a process of the road traffic simulator in accordance with the present invention. This flow is not necessarily performed in the same cycle throughout the whole process. An appropriate and independent cycle is set for each function of the process. In this embodiment, the process includes three flows, a long cycle, an intermediate cycle and a short cycle. They are computed in 1(s), 100(ms) and 10 (ms) respectively. Inputs from the long cycle flow to the intermediate cycle flow and from the intermediate cycle flow to the short cycle flow are updated in respective cycles in which respective flows are repeated. Besides, the vehicle locations that are updated during the cycles in which the long cycle flow and the intermediate cycle flow are respectively repeated are fed back to the short cycle flow, so that those vehicle locations may be updated in the short cycle flow.

When the simulation starts, an initial location and a destination for each of newly-appearing moving objects are first established in the long cycle flow (S100). Then, among the all moving objects, as for the moving objects whose route is not set yet, whose route is out of the established route or whose route-searching condition has been changed, their routes are established (S102). Each moving object recognizes its location and the surrounding traffic situation (S104) and determines parameters for generating TD areas corresponding to the recognized traffic situation (S106).

In this embodiment, a TD area is defined by a "travel difficulty" which is a numerical value indicating a degree of difficulty and easiness of travel. By introducing the travel difficulty, the state of traffic reflecting various elements can be unitary expressed. Besides, the travel difficulty comprises a travel hampering degree indicating a degree of difficulty in traveling and a travel inducing degree indicating a easiness of travel. Since the travel difficulty is defined this way, higher the value more difficult to travel. The travel hampering degree takes a positive value of the travel difficulty and the travel inducing degree takes negative value of the travel difficulty.

In the intermediate cycle flow, TD areas are created based on the parameters produced in the long cycle flow and the subject vehicle's location updated in the short cycle flow (S108), and then a apparent travel difficulty distribution that are viewed from the subject moving object is calculated (S110) and a target direction and a target speed of the subject moving object are calculated by utilizing the apparent travel difficulty (S112).

In the short cycle flow, an operation output value to be given to the vehicle dynamics model 34 is calculated (S114) and the behavior of the moving object based on the operation input value is calculated by using the vehicle dynamics model 34 (S116). The moving object moves to the calculated location in accordance with the calculated behavior, and the display unit 16 displays the corresponding simulation images (S118). The location of the moving object is fed back to the intermediate cycle flow and the long cycle flow. It should be noted that the operations of all moving objects are not necessarily synchronized but the processes for each moving object are performed in parallel.

It should be also noted that the types of the cycles are not limited to three types of long, intermediate and short cycles. For example, the step (S100) for establishing the initial locations and the destinations of the newly-appearing moving objects and the step (S102) for establishing the route of the moving object may be performed in a super-long cycle flow that is further longer than the long cycle flow. Besides, all of the processing steps in each cycle need not necessarily be performed. For example, the step (S100) for establishing the initial locations and the destinations of the newly-appearing moving objects is not performed when there exists no corresponding moving object. Moreover, the timing for the processes in each cycle need not necessarily be synchronized. For example, the long/intermediate/short cycle processing blocks may be structured to be performed in parallel in individual control cycles and exchange the information each other.

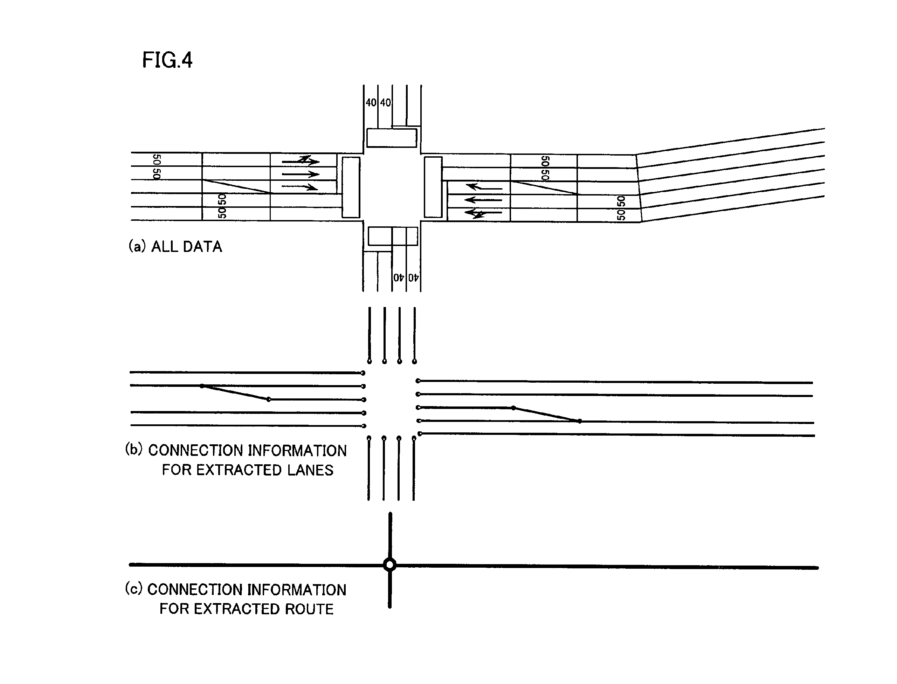

Figure 4 shows an example of a traffic environment database 20. The traffic environment database has road data, traffic sign data and connection data. (a) of Figure 4 shows an outline of all types of data which the traffic environment database 20 has. The database preserves physical forms and types of streets, physical forms and types of traffic signs and regulation indicators and connection relations. The road data include width and length of traffic lanes, friction coefficients of road surfaces, locations and types of roadways and walkways, traveling directions and so on. The traffic sign data include locations, types and operating conditions regarding signals, railway crossings, speed regulation signs, such course regulations as turn right, turn left and go straight, stop signs, lane markings, median stripe, crosswalks and so on. Further, lane connection information and/or route connection information such as shown in (b) and (c) in Figure 4 are obtained from the connection data as graphs to be used in each process in the driver model 32.

## 2. Driver model

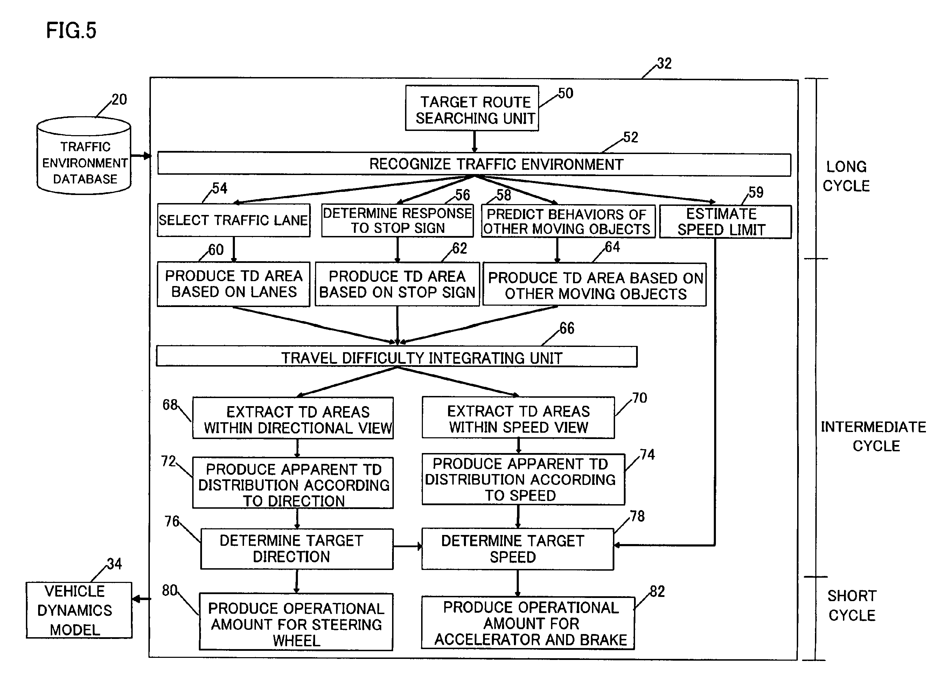

Figure 5 shows an example of a driver model 32. A driver model 32 performs a short cycle process for performing reflective behavior, an intermediate cycle process for calculating target directions and target speeds which are required for the short cycle process. The driver model 32 also performs a long cycle process for generating routes and TD areas which are required for performing the intermediate cycle process. In this embodiment, each cycle is defined as 10(ms), 100(ms) and 1000(ms) respectively, but the cycles are not necessarily limited to these ones.

### 2.1 Long cycle process

The long cycle process performs a process, for example, for establishing a route or obtaining an outline of the traffic situation surrounding a subject moving object. Such process has a characteristic that it is not updated frequently. Specifically, the long cycle process includes, a target-route searching unit 50 for obtaining a route for a subject vehicle, a traffic-situation recognizing unit 52 for recognizing the traffic situation surrounding the subject vehicle, a traveling-lane selecting unit 54 for classifying the recognized traffic environment into three elements (namely, traveling lanes with associated facilities, stop signs, the other moving objects) so as to prepare for generation of travel difficulty (TD) areas for each of the classified elements, a unit 56 for determining behaviors in response to stop signs, a unit 58 for predicting behaviors of the other moving objects and a unit 59 for estimating a target upper speed limit that is appropriate for the surrounding traffic environment.

### 2.1.1 Target-route searching unit

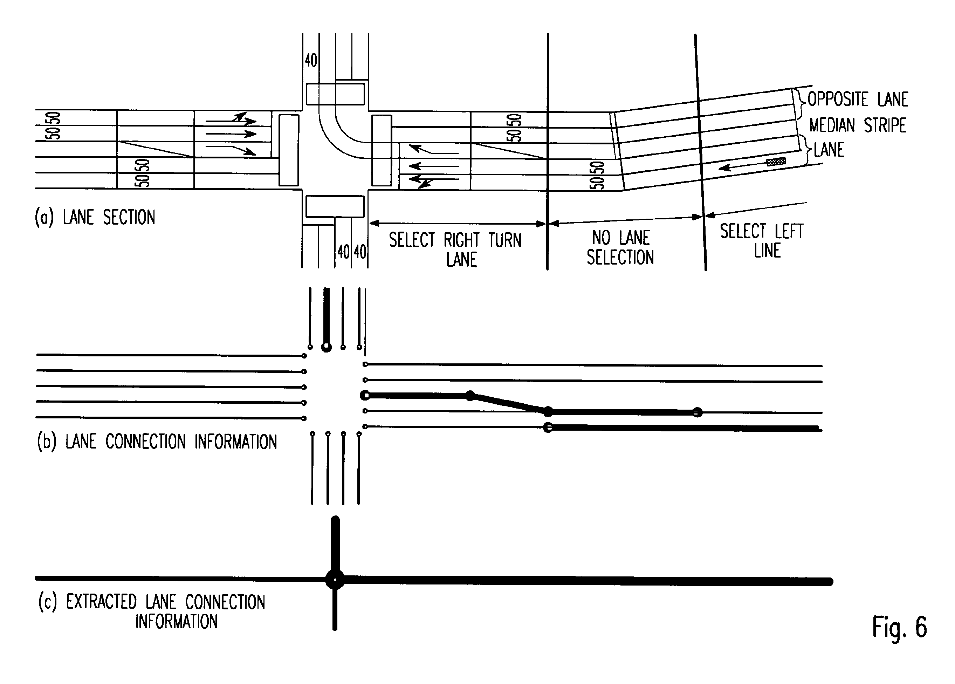

The unit 50 produces moving objects, establishes their initial locations and calculates target routes to be taken relative to respective destinations of each moving object. The route calculation is performed by using the route connection information shown in Figure 4 (c) and utilizing such known technique as the Dijkstra method, the A* algorithm or the like which is used in the navigation system or the like. A route is established in a form of nodes and links as shown in Figure 6 (c).

The route calculation is performed only for the following moving objects:

* a newly appeared object whose route has not been established;
* an object traveling out of the established route or an object whose established route has become invalid because the destination or the routing point has been changed; and
* an object whose route-setting condition has been changed because of, for example, avoidance of the traffic jam and/or use of the expressway.

### 2.1.2 Traffic-environment recognizing unit

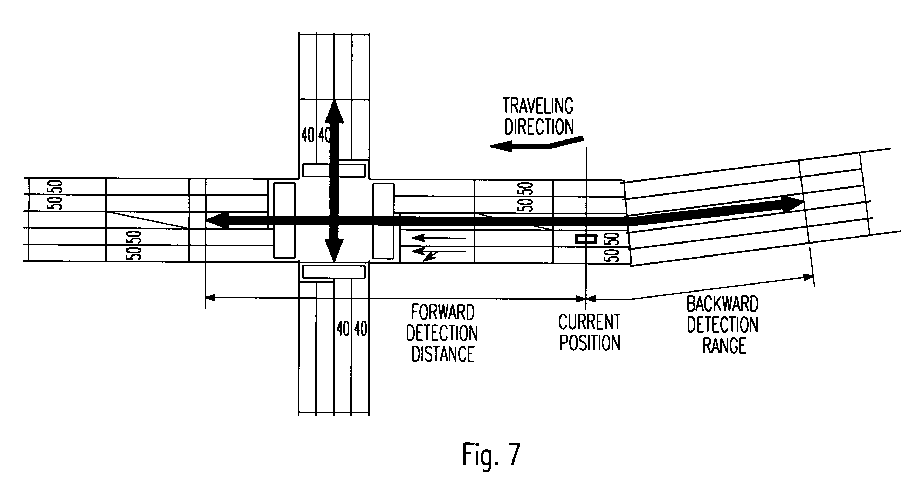

The unit 52 extracts items to be recognized by each moving object when it travels. Such items include physical structures and/or regulations of roads, the location of the subject vehicle, locations and types of traffic signs around the subject vehicle, locations, speeds and/or types of the other moving objects around the subject vehicle and conditions of lamps and/or horns of the other moving objects. In the embodiment shown in Figure 7, the area 100 (m) in a forward direction and 75 (m) in a backward direction (along the route) is an area for recognizing surrounding situations. However, any other size and shape may be applied, for example, the size may be in a range of a few seconds and the shape may be, for example, a circle. Recognition of the location of the subject vehicle determines to which traffic lane a coordinate (x, y, z) for the subject vehicle belongs. The coordinate is to be updated in the vehicle dynamics model 34.

### 2.1.3 Traffic lane selecting unit

The unit 54 selects a traffic lane for the subject vehicle to travel through based on the route established by the route searching unit 50 and the lane information obtained by the traffic environment recognizing unit 52. Figure 6 shows an exemplary process performed by the traffic lane selecting unit 54. Sketch (a), (b) and (c) in Figure 6 correspond to those in Figure 4 respectively. Sketch (c) shows a route, which is established in the route searching unit 50, expressed in nodes and links of roads. The route is illustrated in more details in (b) and (a) for selecting traveling lanes. Sketch (a) shows a situation in which certain traffic lanes are selected for the subject vehicle to be able to run through in order to follow the established route based on the information for each traffic lane (such as the travel allowable direction for each lane and/or instructions/regulation signs of the boundary line of the roadway) which is obtained in the environment recognizing unit 52.

In Figure 6, the areas in gray color represent unselected traffic lanes and the areas in white color represent selected traffic lanes. The subject moving object currently selects the left lane and, from that point ahead, it does not select any specific lane for the moment. At the point further ahead, the subject moving object selects a right-turn lane for turning right and then selects a right lane just after the right turn.

Personality of a driver can be expressed in the way of selecting a traveling lane in the lane selecting unit 54. For example, a careful driver may selects a right lane far ahead the crossing in case of turning right, but a driver in a hurry or a driver who has no uncertain feeling about the lane changing operation may not insist on keeping the right-turn lane until the just right-turning time.

### 2.1.4 Stop-sign behavior determining unit

The unit 56 determines a behavior, that is, stop or pass, at a stop line in response to a stop sign. The determination is performed upon a stop sign in association with a stop indication such as a signal, a railway crossing and/or a temporary stop regulation. For example, as for a signal, such determination is performed as "pass at the blue signal, stop or pass at the yellow signal and stop at the red signal". As for the railway crossing, such determination is performed as "stop temporarily when the crossing gate is open and the audible alarm is not ringing, but stop otherwise". As for the temporary stop sign, such determination is performed as "stop for five seconds within a range of 1 meter from the stop line and then pass".

The stop-sign behavior determining unit 56 can express a variety of personality for drivers by preparing a plurality of parameters produced for each determination and then combining those parameters. For example, an impatient driver may be allowed to pass just after the signal change to yellow or red. Or, a temporary stop time for the stop sign may be set as variable, so that the personality can be expressed.

### 2.1.5 Other vehicle behavior predicting unit

The unit 58 predicts behaviors of the other moving objects around the subject moving object and produces necessary parameters in order to produce travel difficulty (TD) areas for those other moving objects. The parameters are produced regarding the predicted behaviors of the other moving objects, types of the other moving objects and the conditions of turn-signal and/or horns. Prediction is performed upon the travel direction and the speed for each of the other moving objects. A rectangle defined by length/width of a moving object becomes a basic form for a T area to be produced by the subsequent unit 64 that produces travel difficulty (TD) areas for the other moving objects. As parameters for adjusting this basic form, there are the speed and the direction in the lengthwise direction and there are the sideway passing margin (which is determined by the absolute speed of the subject vehicle and the relative speed to the other moving object), types of the other moving objects and/or the conditions of turn signals and/or horns in the widthwise direction.

The other vehicle behavior predicting unit 58 can express a variety of personality for drivers by preparing a plurality of parameters that are produced for the speed, the side pass margin, types of the moving objects, turn signals and/or horns and combining those parameters. For example, an impatient driver may have lower side pass margin.

2.1.6 Upper speed limit estimating unit

In one embodiment of the present invention, the upper speed limit estimating unit 59 may be provided in addition to the above-described units.

This unit 59 determines the upper speed limit of the subject vehicle considering surrounding situations. The unit 59 estimates a target upper speed limit V1 based on the traffic rules such as a speed limit VL and the location of the subject vehicle recognized in the environment recognizing unit 52 and traffic situations involving the other vehicles and/or the speed of the subject vehicle. The estimation is performed, for example, according to the following steps:

(1) Obtain distances from the other vehicles that are located immediately before and after the subject vehicle, a density of vehicles in the recognizing area and an average speed of the vehicles in the recognizing area based on the locations of the other vehicles and the location of the subject vehicle that are recognized in the traffic environment recognizing unit 52;

(2) Set the upper speed limit V1 to a value gained by increasing the speed limit VL by, for example, 20% when the distance to a vehicle traveling immediately ahead of the subject vehicle is larger than a predetermined threshold value. The threshold value is dynamically produced, for example, by a traveling distance for the subject vehicle during a predetermined time period (for example, 3 seconds).

(3) Set the upper speed limit V1 to a value gained by increasing the speed limit VL by, for example, 20% when the distance to a vehicle traveling immediately after the subject vehicle is below a predetermined threshold value. The threshold value is dynamically produced, for example, by a running distance for the subject vehicle during a predetermined time period (for example, 0.5 seconds).

(4) Set the upper speed limit V1 to an average speed of the vehicles within the filed of view when the density of the vehicles in the field of view in the lane where the subject vehicle is traveling is larger than a predetermined value. The threshold value is a predetermined density (for example, 0.02 vehicles /m$^2$).

(5) Select the largest one of the obtained 1 to 3 upper limit values V1 as the target upper speed limit V1.

Such estimated upper speed limit V1 is sent to the target speed determining unit 78 to be used for determining the target speed.

2.2 Intermediate cycle process

The intermediate cycle process obtains the target direction and the target speed by using the parameters prepared in the long cycle process and the subject vehicle location updated in the short cycle process. Specifically, the intermediate cycle process includes steps of generating respective travel difficulty (TD) areas for both direction and speed. A unit 60 determines travel difficulty (TD) area based on traffic lanes. A unit 62 determines TD area based on stop-signs. A unit 64 determines TD area based on other vehicles. The produced TD areas are integrated in terms of each of the direction and the speed by an integrating unit 66. A unit 68 extracts the TD areas in the field of view from the integrated TD areas for both direction and speed. A unit 70 extracts TD areas in a field of speed view. Units 72 and 74 generate respective apparent travel difficulty distributions for direction and speed respectively. A unit 76 determines the target direction. A unit 78 determines a target speed. The target direction and speed thus determined are provided to the short cycle process.

2.2.1 A Unit for Determining TD area based on Traffic-lane

The unit 60 produces TD areas based on the road shapes and the traffic lanes. As shown in an example in Figure 6 (a), the unit 60 produces TD areas for both direction and speed regarding the lane selected by the travel lane selecting unit 54.

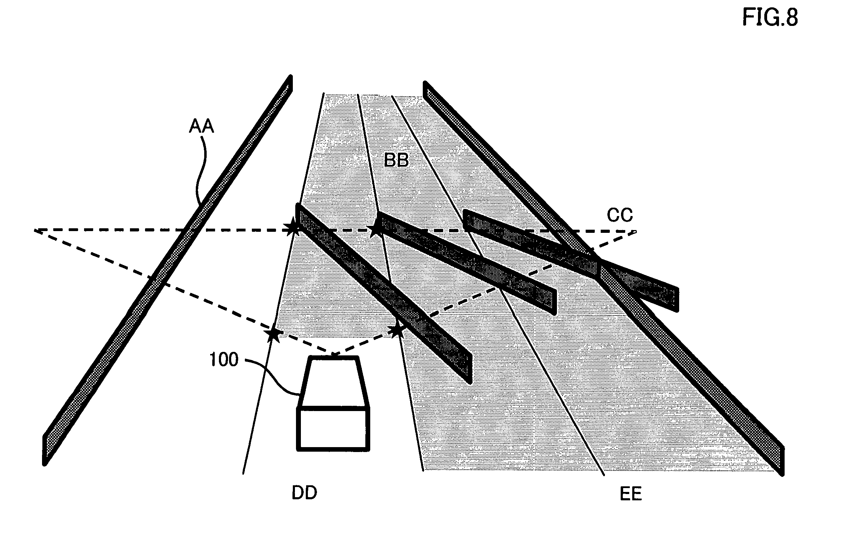

Traffic lane TD areas for the speed are produced as follows. Physical road barriers such as road edges, guardrails, media stripes or the like are elements that may influence the speed. Therefore, as for the physical road barriers recognized in the traffic environment recognizing unit 52, TD areas (wall-shaped) having a height of 1 are produced along their boundaries (See AA in Figure 8).

Traffic lane TD areas for travel direction are produced as follows. Elements that may influence the direction are open lanes and closed lanes that are specified by the travel lane selecting unit 54 in addition to the physical road barriers influencing the speed. The open lane is a lane where the subject vehicle can travel, while the closed lane is a lane where the subject vehicle should not travel. In addition to the TD areas for the speed, the TD areas for the direction are produced such that they may block the traffic lanes that are specified as the closed lanes by the travel lane selecting unit 54.

Figure 8 shows examples of traffic-lane TD areas that are used for changing lanes. In the examples, intersection points between both edges of a closed traffic lane EE and a field of view for direction decision CC are first obtained. In general, four intersection points are obtained for each traffic lane (refer to black stars in Figure 8). The field of view refers to a range that a driver in the real world would consider availability for travel. In this embodiment of the invention, it is assumed that the extent of the range needed for determining the direction and the extent of the range needed for determining the speed are different from each other. Thus, two types of fields are determined, a field of view for direction decision (to be referred to as direction view) and a filed of view for speed decision (to be hereinafter referred to as speed view). Alternatively, a same extent of range could be used for both the direction view and the speed view. The field of view shown in dotted lines in Figure 8 is a direction view CC. When no intersection point is obtained, the process is interrupted and skipped. When intersection points for both edges are obtained, a TD area BB (wall-shaped) is established along a line that connects the farther intersection point on the near side edge to the open traffic lane DD with the closer intersection point on the other edge. Such TD areas BB are produced for all closed traffic lines EE located in the direction view CC.

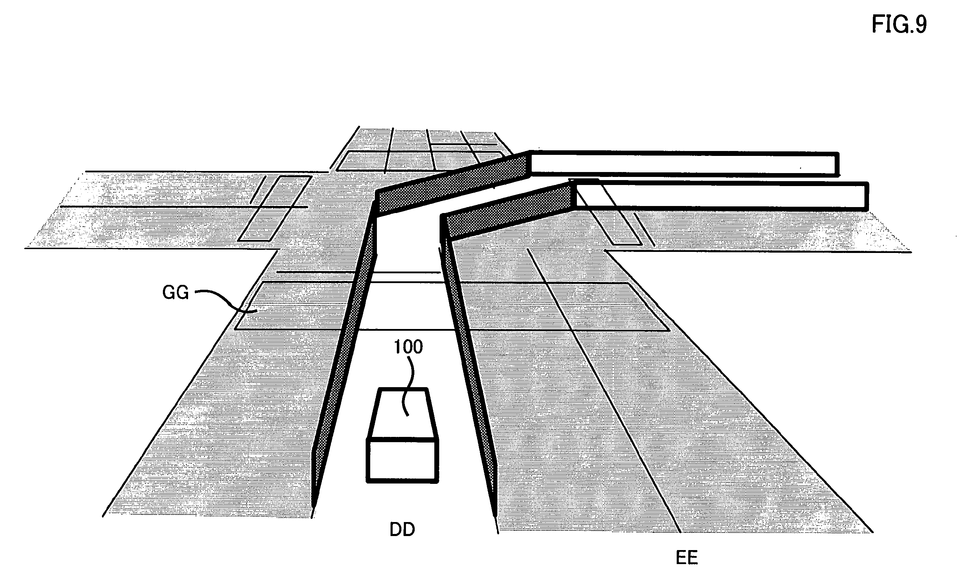

Figure 9 shows an example of a traffic-lane TD area that is produced when the subject vehicle 100 turns right. In case of right turn, the same TD areas are produced for both speed and direction relative to the traveling lane DD. Within the crossing, such virtual traveling lane that connects to a traffic lane on which the subject vehicle 100 will travel after the right turn is first created and then a TD area corresponding to that virtual traveling lane is produced.

2.2.2 A Unit for Determining TD area based on Stop-signs

The unit 62 produces a TD area relative to speed and direction at a stop line corresponding to a stop sign, with which a stop action is determined by the behavior determining unit 56. The stop-sign TD area for the speed is produced as follows. A TD area having a height of 1 (wall-shaped) is produced on a stop line corresponding to a stop sign upon which a stop action is determined by the stop-sign behavior determining unit 56.

The stop-sign TD area for the direction is produced as follows. Since the unit 62 understands that a stop line is not to avoid it but to stop there, the unit 62 does not produce a TD area for the direction or produce a travel inducing degree (that is, a negative travel difficulty) so as to have the subject vehicle stop before the stop line. In other words, a TD area (wall) having a height of -1 is produced on the stop line. By this process, a direction is determined in such a way that a mobile vehicle may be pulled toward a stop line.

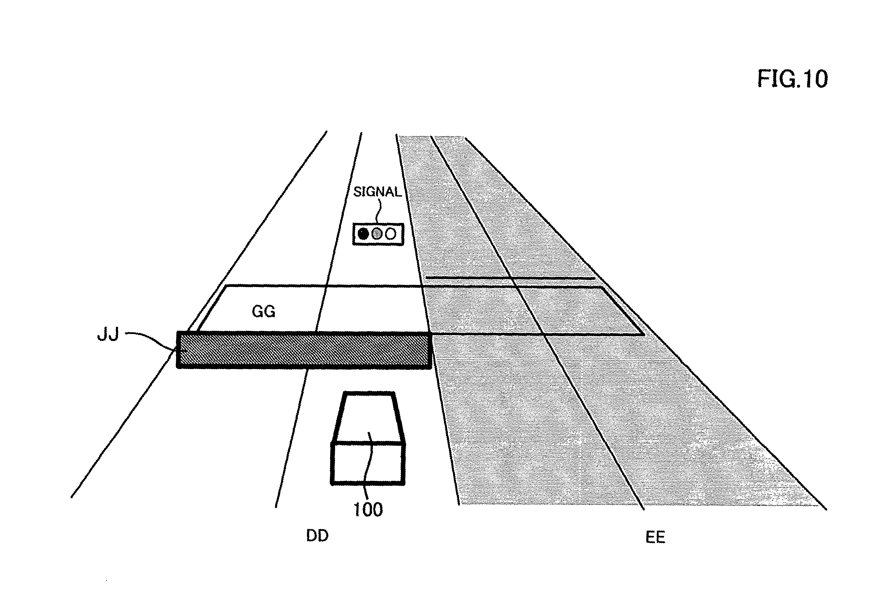

Figure 10 shows an example of generation of a TD area for the speed. In Figure 10, because there is a signal in front of the subject vehicle 100, a stop action is determined by the stop-sign behavior determining unit 56. The unit 62 produces a TD area JJ (wall-shaped) for the speed having a height of 1 on the stop line GG corresponding to that signal.

2.2.3 Unit 64 for Determining TD area based on Other Vehicles

The unit 64 produces TD areas in association with the other moving objects around the subject vehicle in accordance with the actions that are predicted by the other-vehicle-behavior predicting unit 58.

TD areas for the speed are produced by using the parameters produced by the other vehicle behavior predicting unit 58 according to the following procedure.

(1) Produce a basic form, an area having the same length and width as those of the concerned other moving objects.
(2) Expand the length of the basic form in accordance with the speed predicted in the unit 58.
(3) Adjust the width in accordance with the type of the moving object. For example, the width is expanded in case of a bus, a truck, a motorcycle or the like.
(4) Adjust the width of the margin such that it is expanded when the absolute speed of the subject vehicle or another other moving object is high.
(5) As for another moving object that is traveling blinking the turn-signal lamp, expand the width on the lateral side along the lamp-flashing direction.
(6) As for another moving object that is sounding the horn, expand its longitudinal length.

A TD area for the direction is not produced as for another moving object that is not an object to avoid, for example, a preceding vehicle that the subject vehicle is following or an vehicle in the opposite-side waiting for the right turn. The generation method is same as for the speed.

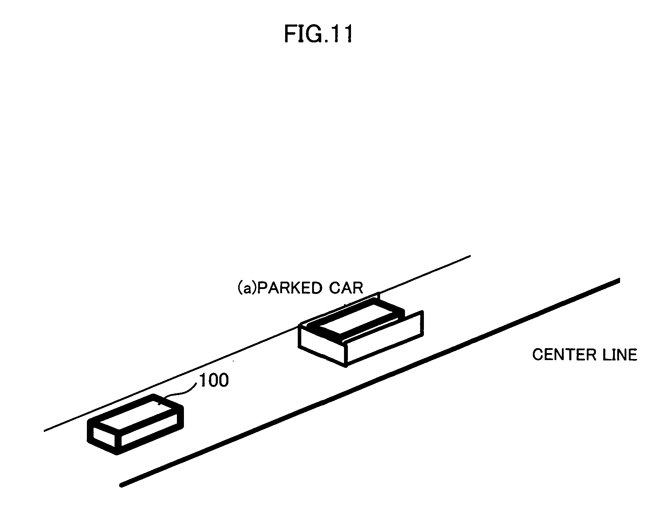

Figure 11 shows an example of a moving object TD area. In Figure 11, near the subject moving object 100, a moving object (a) is parked. With respect to the moving object (a), a TD area is produced as follows. Since the speed of the moving object (a) is determined as zero by the unit 58, the unit 64 produces a TD area having a length of the moving object (a) and a width obtained by adding the side pass margin to the width of the moving object (a). Since the type of the moving object (a) is a passenger car, the turn signal is off and the horn is not sounding, the TD area is not influenced by these factors.

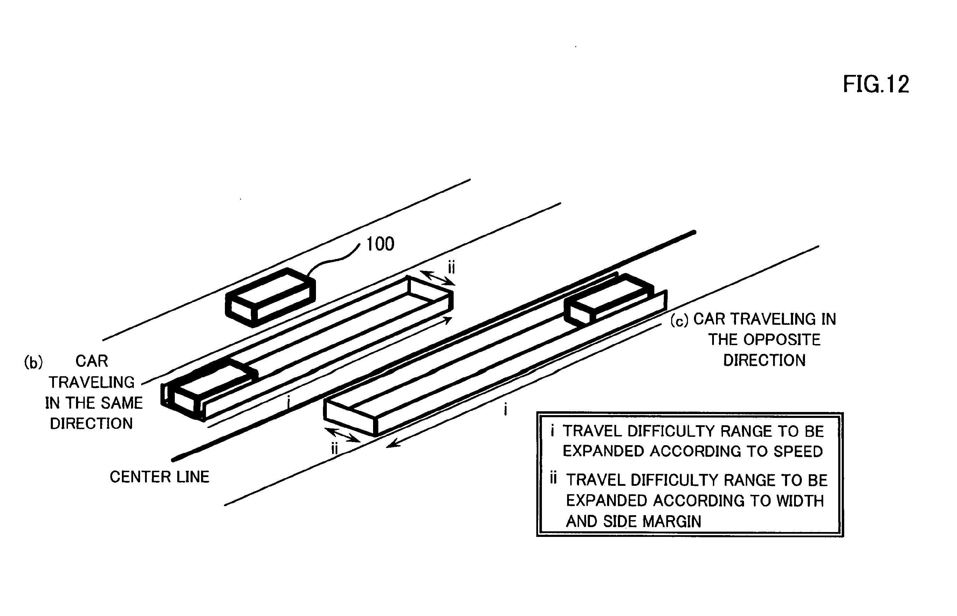

Figure 12 shows further examples of the moving object TD areas. In Figure 12, near the subject moving object 100, a moving object (b) is traveling in the same direction and a moving object (c) is traveling in the opposite direction. With respect to the moving objects (b) and (c), TD areas are produced as follows:

Since it is determined by the unit 58 that the moving object (b) is traveling with a speed X in the same direction as the subject moving object 100, the unit 64 produces a TD area having a length extended according to the speed X and a width extended according to the width of the moving object (b) and a side pass margin. The side pass margin is relatively small because the moving object (b) runs in the same direction. Since the type of the moving object (b) is a passenger car, the turn signal is off and the horn is not sounding, the TD area is not influenced by these factors.

With respect to the moving object (c), it is determined by the unit 58 that it is traveling with a speed Y in the opposite direction. The unit 64 produces a TD area having a length extended according to the speed Y and a width extended according to the width of the moving object (c) and the side pass margin. The side pass margin is relatively large because the moving object (c) runs in the opposite direction. Since the type of the moving object (c) is a passenger car, the turn signal is off and the horn is not sounding, the TD area is not influenced by these factors.

2.2.4 TD area integrating unit

The unit 66 integrates TD areas produced by the units 60, 62 and 64. Integration is performed by summing the respective TD areas.

2.2.5 Units for extracting TD area according to views

The unit 68 extracts TD areas in the established direction view. The unit 70 extracts TD areas in the established speed view. The TD area integrated by the integrating unit 66 is superimposed on the field of view, so that the TD area within the field of view can be extracted.

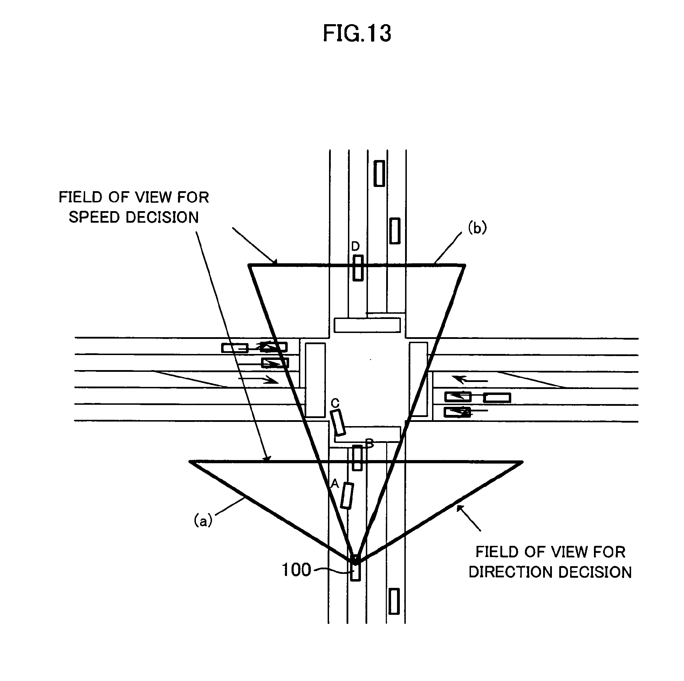

Figure 13 shows an example of a method for establishing a field of view. A shape of the field of view may be a triangle as shown in Figure 13, or a sector, an oval or the like. In this embodiment, the field of view is formed by using such triangle that may vary in its depth and width depending on the speed as defined by the following equation:

$$d = \max ( k_d * v, d_{min}) \qquad (1)$$

$$w = \min (k_w / v, w_{max}) \qquad (2)$$

where d represents depth, $d_{min}$ represents minimum depth, w represents width, $w_{max}$ represents maximum width, v represents a traveling speed, and $k_d$ and $k_w$ represent a constant respectively. In this embodiment, two sets of $k_d$ and $k_w$ are prepared in order to create two types of triangles such as a triangle ((a) in Figure 13) having wider width and shorter depth and another triangle ((b) in Figure 13) having narrower width and longer depth.

In one embodiment, a direction view is formed by the triangle (a) and a speed view is formed by a sum of the triangles (a) and (b). The depth of the triangle (b) is longer and the width of the triangle (a) is wider.

It should be noted that formation of the view by summing the two triangles is not limited to the speed view but the same shape may be used for both of the speed view and the direction view.

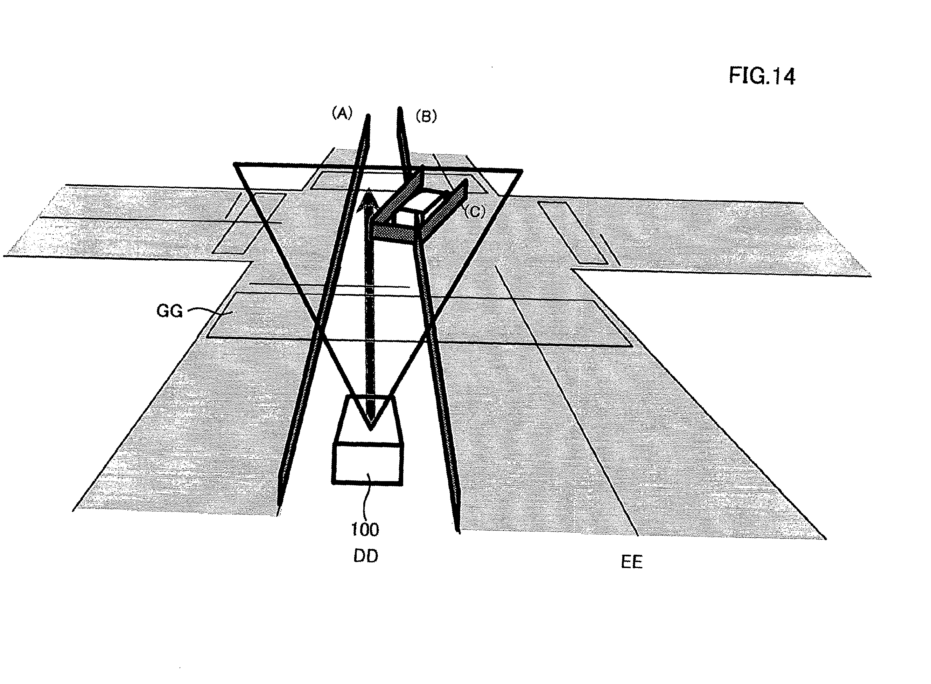

Figure 14 shows an example for extraction of a TD area. In this example, the TD area within the field of view is extracted by superimposing the traffic-line TD areas (A) and (B) and the moving object TD areas (C) on the field of view.

2.2.6 Unit 72 and 74 for generating apparent TD distributions

The unit 72 produces an apparent travel difficulty distribution for travel direction and the unit 74 produces an apparent travel difficulty distribution for speed. Both units produce the respective distributions in the same manner, but the extracted TD areas are different.

An apparent travel difficulty distribution indicates respective "apparent" travel difficulty for each direction Ø in the field of view of the driver model. In other words, it is a numerical value indicating the influence of TD areas "seen" from the driver model over the operation of the driver model when the driver model decides a moving direction and a speed of the subject moving object.

Accordingly, the larger is the travel difficulty of the TD areas in a direction $\phi$, the larger is the apparent travel difficulty distribution for the TD areas. The larger is the distance of the moving object from the TD areas, the smaller is the apparent travel difficulty distribution. For example, an apparent travel difficulty distribution d(ø) is calculated in accordance with the following equation:

$$d(\Psi) = \max_{i} \frac{D_i(\Psi)}{l_i(\Psi)} \qquad (3)$$

where $D_i(\phi)$ represents a travel difficulty in the i-th TD area among the areas detected in the direction $\phi$, and $l_i(\phi)$ represents a distance from the moving object to the i-th TD area among the areas detected in the direction $\phi$.

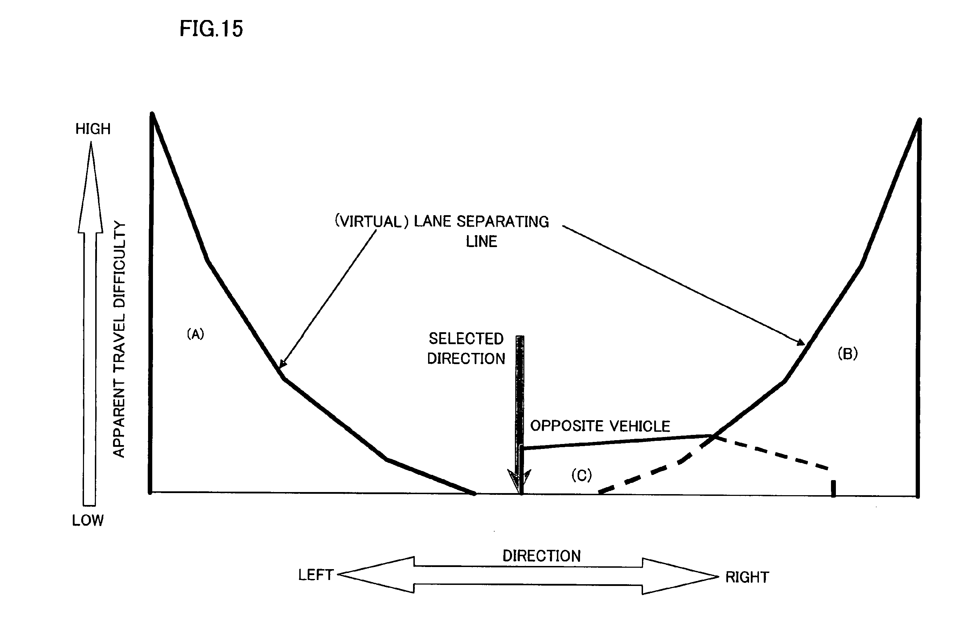

Figure 15 shows an apparent travel difficulty distribution corresponding to Figure 14. The TD areas (A), (B), (C) are transformed to an apparent travel difficulty distribution through the above-described process.

The apparent travel difficulty distribution d($\phi$) represents a numerical distribution in which all information about the extracted areas (for example, whether or not the area is a building outside of the road or a traffic rules) is completely stripped off. Thus, the TD areas and the various traffic rules are represented in terms of only one index.

Hereafter, $d_d(\phi)$ represents an apparent travel difficulty distribution for direction and $d_s(\phi)$ represents an apparent travel difficulty distribution for speed.

2.2.7 Target direction determining unit

The target direction determining unit 76 receives and searches the apparent travel difficulty distribution for direction $d_d(\phi)$ so as to detect a direction in which the apparent travel difficulty exhibits the minimum and set it as a target direction $\phi_T$.

2.2.8 Target speed determining unit

The target speed determining unit 78 receives the apparent travel difficulty distribution for speed $d_s(\phi)$ and the target direction $\phi_T$ to determine the apparent travel difficulty in the target direction $\phi_T$. The unit 78 calculates a target upper speed limit Vd based on the travel difficulty. The target upper speed limit Vd is set such that it becomes smaller or becomes zero as the apparent travel difficulty for the direction becomes higher. For example, the target upper speed limit Vd is calculated according to the following equation:

$$v_d = \sqrt{\frac{a_x}{d}} \qquad (4)$$

where $a_x$ represents a maximum acceleration speed in the longitudinal direction at the time of the deceleration, which is set up for each driver model. "d" represents an apparent travel difficulty in the target direction $\phi_T$.

Then, from the target upper speed limit Vd and the upper speed limit $v_{max}$ that is established for each driver model, a smaller one is selected as a target speed VT' as shown in the following equation:

$$v_T' = \min (v_d, v_{max}) \qquad (5)$$

When there is available information about the upper speed limit $v_1$ that is set by the traffic environment recognizing unit 52, the VT' and $v_1$ are compared to select the smaller one as the target speed VT as shown in the following equation:

$$v_T = \min (v_T', v_1) \qquad (6)$$

The determined target speed VT is output to an accelerator/brake operation value generating unit 82.

As described above, a mobile unit can avoid the other mobile units and/or areas out of the roads while keeping the traffic lane in accordance with the target route.

2.2.9 Second embodiment of intermediate cycle process

The above-described embodiment for the intermediate cycle process is a process for determining in parallel the target direction and the target speed by generating the travel difficulty for both direction and speed through use of the TD areas produced by the integrating unit 66. On the other hand, a sequential process may be implemented as a second embodiment, where the target direction is first determined and then the target speed is determined based on the determined target direction. The difference from the driver model 32 in Figure 5 is in that the structure from the integrating unit 66 up to the target speed determining unit 78 is changed from parallel to sequential. Therefore, the second embodiment will be described below with attention focused on this difference.

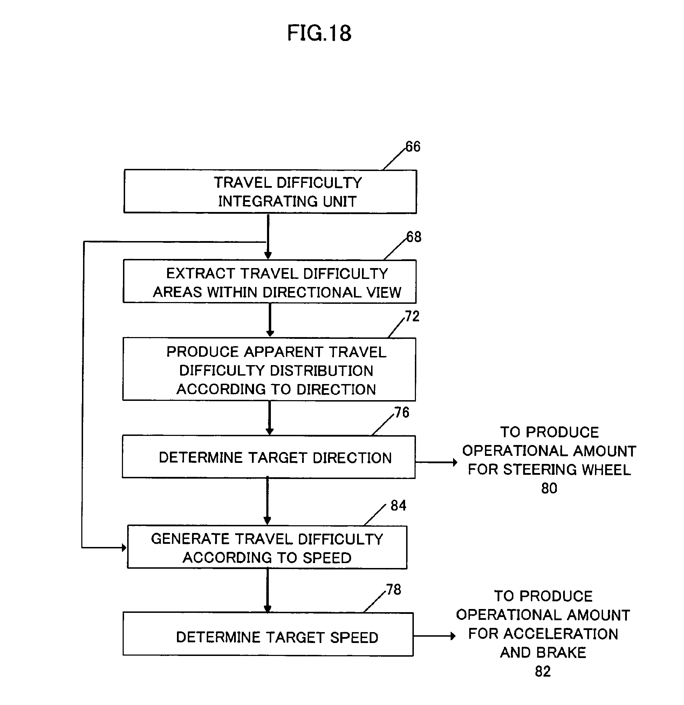

Figure 18 shows functional blocks from the integrating unit 66 up to the target speed determining unit 78 in which the structure is changed from the functional blocks of the driver model 32 shown in Figure 5. The units 66, 68, 72, 76 and 78 are same as the respective functional elements shown in Figure 5.

In the second embodiment, after the TD areas are produced by the integrating unit 66, the process for determining the direction is first performed (by the units 68, 72 and 76) so as to determine the target direction $\varnothing_T$ based on the travel difficulty.

Subsequently, the target direction $\varnothing_T$ from the target direction determining unit 76 and the information about the TD areas from the integrating unit 66 are input to a speed apparent travel difficulty generating unit 84.

The unit 84 searches the TD areas in the target direction $\phi_T$ and finds out the maximum travel hampering degree so as to calculate the apparent travel difficulty. The searching range is set with the same depth as that of the triangle (b) to be used for determining the speed view previously used by the unit 70. The apparent travel difficulty is calculated from the obtained maximum travel difficulty and its distance according to the following equation:

$$d(\Psi_T) = \max_i \frac{D_i(\Psi_T)}{l_i(\Psi_T)} \qquad (7)$$

where $D_i(\phi_T)$ represents a travel difficulty in the i-th TD area among the areas detected in the target direction $\phi_T$, and $l_i(\phi_T)$ represents a distance from the moving object to the i-th TD area among the areas detected in the target direction $\phi_T$.

Then, the apparent travel difficulty for the speed is input to the target speed determining unit 78, where the above-described process (refer to 2.2.8) is performed to determine the target speed VT.

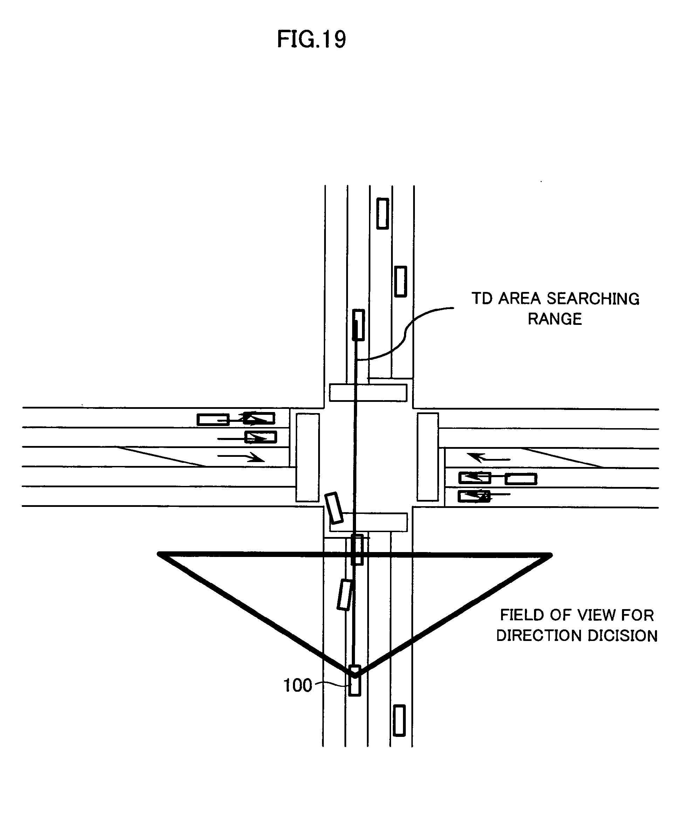

The difference between the speed apparent travel difficulty generating unit 84 and the speed apparent travel difficulty distribution generating unit 74 is in that the searching range for the TD areas for calculating the apparent travel difficulty is different. Figure 19 shows the searching range for the TD areas by the unit 84. As seen in Figure 19, the apparent travel difficulty for the speed is searched only in the target direction, so that the searching range for the speed is significantly decreased, which contributes to a calculation cost reduction.

2.3 Short cycle process

The short cycle process calculates a control output provided to the vehicle dynamics model 34 by using the target direction and the target speed prepared by the intermediate cycle process. Specifically, a steering wheel operation amount generating unit 80 receives the target direction to produce a steering wheel operation amount and an accelerating/braking operation amount generating unit 82 receives the target speed to produce accelerating/braking operation amounts.

2.3.1 Steering wheel operation amount generating unit

The steering wheel operation amount generating unit 80 converts the target direction $\varnothing_T$ into a steering wheel operation amount to be given to the vehicle dynamics model 34. This conversion is performed, for example, according to the following steps:

First, a temporary target steering wheel angle $S_{Tmp}$ is obtained by multiplying the target direction $\varnothing_T$ by a steering gain $g_s$. Next, a limiting process upon the obtained $S_{Tmp}$ is performed using an operation range $[-S_{Tmp}, S_{max}]$ for the steering wheel that is set up for each vehicle dynamics model, so as to calculate a target steering wheel angle $S_T$. Then, a difference between the calculated target steering wheel angle $S_T$ and the current steering wheel angle $S_{k-1}$ is calculated. The calculated difference is multiplied by a predetermined time-lag gain $g_s^d$ ($0 \leq g_s^d \leq 1$) to calculate a Äs. Then, $S_{k-1}$ is added to Äs to obtain the steering wheel operation amount. These calculations can be expressed as follows:

$$\Delta s = g_s^d(s_T - s_{k-1}) \tag{8}$$

$$s_k = s_{k-1} + \Delta s \tag{9}$$

### 2.3.2 Accelerating/braking operation amount generating unit

The accelerating/braking operation amount generating unit 82 converts the target speed VT into an accelerating amount and a braking amount to be given to the vehicle dynamics model. This conversion is performed, for example, according to the following steps:

First, a temporary target accelerator pedal depressing amount $a_{Tmp}$ and a temporary target braking pedal depressing amount $b_{Tmp}$ are obtained by multiplying a difference between the target speed and the actual speed v by a predetermined accelerating gain $g_a$ and a predetermined braking gain $g_b$ respectively. Next, limiting processes upon the $a_{Tmp}$ and the $b_{Tmp}$ are performed respectively using an operation range $[a_{min}, a_{max}]$ or $[b_{min}, b_{max}]$ for the accelerating and the braking operations which are set up for each vehicle dynamics model, so as to calculate a target accelerator pedal depressing amount $a_T$ and a target braking pedal depressing amount $b_T$ respectively. Then, respective differences between the calculated target accelerator pedal depressing amount $a_T$ or the obtained target braking pedal depressing amount $b_T$ and the current accelerating control input $a_{k-1}$ or the current braking control input $b_{k-1}$ are calculated respectively. The differences are multiplied respectively by a predetermined time-lag gain

$$g_a^d \; \left(0 \leqq g_a^d \leqq 1\right) \quad \text{or} \quad g_b^d \; \left(0 \leqq g_d^b \leqq 1\right)$$

so as to calculate Äa and Äb. Then, $a_{k-1}$ and $b_{k-1}$ are added to Äa and Äb respectively, so that the accelerator pedal operation amount and the braking pedal operation amount are obtained. These processes can be expressed as follows:

$$\Delta a = g_a^d(a_T - a_{k-1}) \tag{10}$$

$$a_k = a_{k-1} + \Delta a \tag{11}$$

$$\Delta b = g_b^d(b_T - b_{k-1}) \tag{12}$$

$$b_k = b_{k-1} + \Delta b \tag{13}$$

The calculated steering wheel operation angle, accelerating operation amount and braking operation amount are provided to the vehicle dynamics model 34.

It should be noted that such values as steering gain, accelerating gain and braking and/or each of time-lag gains may be determined as unique values for each driver model in order to represent the personality of the driver.

### 3. Effect of travel inducing degree

In the embodiments of the present invention, a concept of "TD area" is introduced as a criterion for determining the behavior of each moving object model 30. A travel difficulty (TD) area is defined by a travel difficulty, a numerical value indicating the degree of difficulty of traveling through the concerned area. The surrounding traffic situations including various factors can be unitary managed by using the concept of travel difficulty. A positive value of the travel difficulty indicates difficulty of travel, whereas a negative value indicates easiness of traveling. Accordingly, a positive value of the travel difficulty is defined as a hampering degree and a negative value is defined as a travel inducing degree.

By introducing the travel inducing degree to the process for generating the TD areas, the behavior performance of each moving object model can be enhanced. For example, such operations as designation of the course through which the moving objects are wanted to travel, designation of the stop position and/or the direction and an operation for following a particular vehicle can be performed. Specific examples for these operations will be described in the following.

Designation of the course which the moving object should take

The travel inducing degree makes it possible to specify which particular portion of the road the vehicles are encouraged to travel through at the time of changing lanes, turning right or running as usual. Specifically referring to the structure of the driver model 32 in Figure 5, the travel lane selecting unit 54 extracts a road area through which the vehicles are encouraged to travel and the difficult/easy area generating unit 60 produces a travel inducing degree for the direction in association with the extracted area. The travel inducing degree is set to be lower (close to 0) when it is target to specify the traveling area moderately and to be higher (close to -1) when it is target to specify the traveling area firmly.

Designation of the stop position and/or the direction

The travel hampering degree does not control the location and the direction in case of stopping. Instead, the travel inducing degree works to stop a vehicle before a stop line. In particular, the stop-line behavior determining unit 56 determines necessity of generating the travel inducing degree and when needed, the stop-line TD area generating unit 62 sets the travel inducing degree for the direction to a height of 1.

Operation for following a particular vehicle

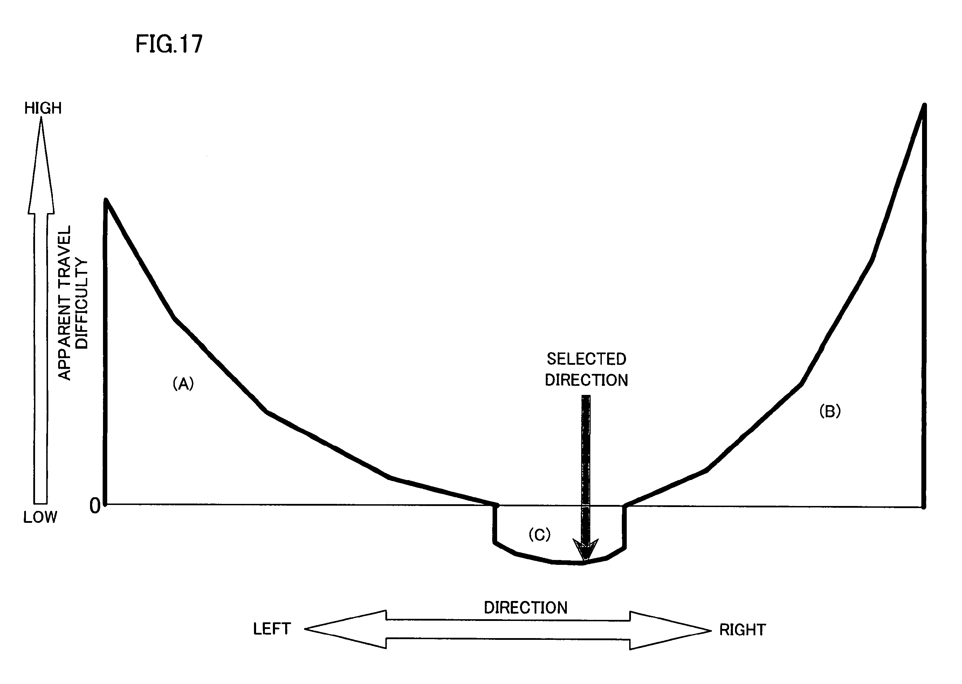

A particular vehicle can be followed by generating a travel inducing degree upon that particular vehicle. Specifically, the other vehicle behavior predicting unit 58 selects a moving object to be followed (not selected when not following) and the other-vehicle TD area generating unit 64 produces travel inducing degrees for both direction and speed regarding the selected moving object. The travel inducing degree is set to be lower when it is target to follow the moving object moderately and to be higher when it is target to follow it firmly.

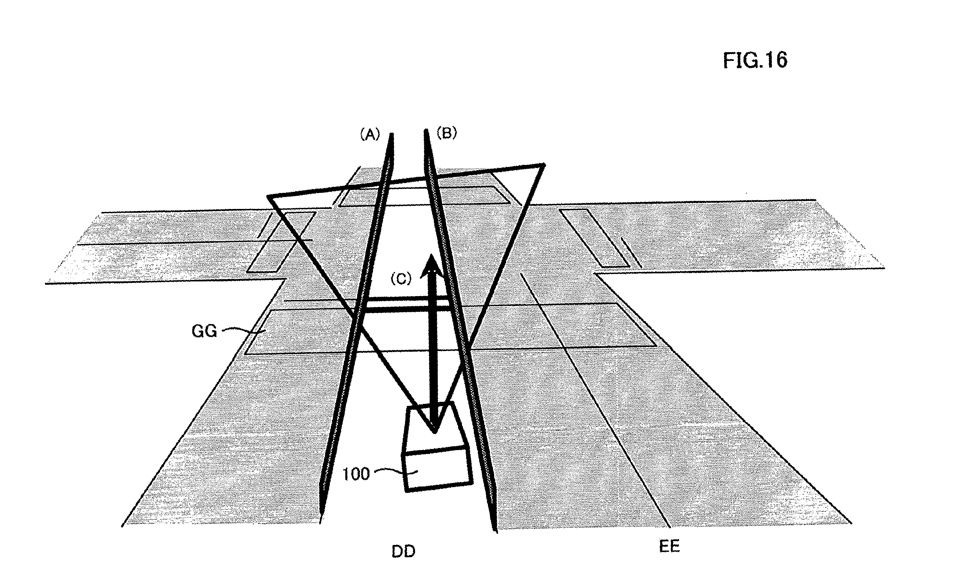

Figure 16 shows an example of introduction of the travel inducing degree in the unit 62. In Figure 16, the travel hampering degree for the speed and the travel inducing degree for the direction are produced relative to the stop position (C) for stopping the vehicle before the pedestrian crossing. The travel hampering degrees for both direction and speed ((A) and (B)) are also produced over the boundaries of the traveling lanes.
The integrating unit 66 gives a negative sign to the travel inducing degree and adds the travel hampering degree to integrate the TD areas. Figure 17 illustrates an apparent travel difficulty distribution for the direction based on the TD areas shown in Figure 16. Since the travel difficulty at the stop position (C) of the pedestrian crossing has become a negative value, this portion becomes a direction that is to be selected by the target direction determining unit 76. Accordingly, the moving object stops properly before the stop line.
The nano-traffic simulator according to the present invention is characterized in that the driving simulator and the traffic simulator are combined and that the behavior of the moving object is produced very freely according to the surrounding traffic environment. The present invention can be applied to the following industrial areas.

(1) Produce a traffic community, which is not existing in the real world, of a new infrastructure and/or a new traffic rules to observe and analyze how the traffic community behaves. For example, a possible change of the traffic community in response to introduction of new facilities and/or rules can be examined with index of traveling time, accident occurrence rate and the like.
(2) A person sits in a cockpit of a driving simulator so as to travel through the traffic simulator by his or her own operation. For example, a test can be made as to how a person drives in a traffic community where new traffic rules are introduced by observing/analyzing the driving operation of the person in the driving simulator.
(3) A driving simulator reproduces the behaviors of moving objects (the behaviors of the moving objects in the traffic simulator or the behavior of the other driving simulators). Accordingly, a person can experience the driving behaviors of the other persons.

The invention has been described relative to specific embodiments. However, the scope of the present invention should not be interpreted to be limited to the embodiments.

**Claims**

1. A road traffic simulation apparatus for simulating road traffic produced by a road traffic environment and a plurality of moving objects (30), the apparatus comprising:

one or more moving object models (30), each including a driver model (32) and a vehicle dynamics model (34); and
a traffic environment database (20);

wherein said moving object model (30) of a subject moving object uses a travel difficulty for unitary indicating a state of traffic around the subject moving object, said state of traffic including traffic environment around the subject moving object and traffic situations involving other moving objects around the subject moving object.

2. The apparatus of claim 1,
wherein the driver model (32) performs a first cycle process of a relatively low update rate for establishing a travel route, and a second cycle process of relatively higher update rate than the first cycle process for obtaining a target direction and a target speed, thereby providing inputs to the vehicle dynamics model(34) for determining the behavior of the vehicle.

3. The apparatus according to any of the preceding claims,
    further comprising:

    a first unit for producing one or more areas of travel difficulty relative to the subject moving object based on data read from said traffic environment database (20) ;
    a second unit for producing one or more areas of travel difficulty based on other moving objects around the subject moving object; and
    an integrating unit (66) for integrating travel difficulties as identified by said first and second units to produce a unitary indication of travel difficulty.

4. The apparatus according to any of the preceding claims,
    wherein the driver model (32) produces travel difficulty areas based on at least one of traffic lanes, stop signs and other moving objects.

5. The apparatus according to any of the preceding claims,
    wherein the driver model (32) further comprises a unit for estimating an upper speed limit at the current time based on the traffic conditions constructed by the other moving objects around the subject moving object.

6. The road traffic simulation apparatus accordingto any of the preceding claims,
    wherein the travel difficulty includes a travel hampering degree indicating a hampering degree of travel and a travel inducing degree indicating a degree of easiness of travel.

7. A method of simulating road traffic produced by a road traffic environment and a plurality of moving objects (30), the method comprising:

    providing one or more moving object models (30), each including a driver model (32) and a vehicle dynamics model (34);
    providing a traffic environment database (20);
    said moving object model (30) of a subject moving object using a travel difficulty for unitary indicating a state of traffic around the subject moving object, said state of traffic including traffic environment around the subject moving object and traffic situations involving other moving objects around the subject moving object.

8. The method according to any of the preceding claims, further comprising:

    said moving object model (30) performing a first cycle process of a relatively low update rate for establishing a travel route, and a second cycle process of relatively higher update rate than the first cycle process for obtaining a target direction and a target speed; and
    said vehicle dynamics model (34) determining the behavior of the vehicle based on the target direction and the target speed.

9. The method according to any of the preceding claims,
    further comprising:

    producing one or more areas of travel difficulty relative to the subject moving object based on data read from said traffic environment database (20);

producing one or more areas of travel difficulty based on other moving objects around the subject moving object; and

integrating travel difficulties as identified by said first and second units to produce a unitary indication of travel difficulty.

**10.** The method according to any of the preciding claims,
   further comprising:

producing driver model travel difficulty areas based on at least one of traffic lanes, stop signs and other moving objects.

**11.** The method according to any of the preceding claims,
   further comprising:

estimating an upper speed limit at the current time based on the traffic situations involving other moving objects around the subject moving object.

# FIG.1

**10**

CONTROL UNIT — 12

DRIVING SIMULATOR (OPTIONAL) — 18

OPERATOR

SIMULATION UNIT — 14

DISPLAY UNIT — 16

FIG.2

EP 1 569 186 A1

EP 1 569 186 A1

# FIG.3

START

SET INITIAL LOCATION AND DESTINATION FOR A NEW MOVING OBJECT — S100

SET ROUTE FOR THE MOVING OBJECT — S102

DETECT SURROUNDING TRAFFIC ENVIRONMENT — S104

DETERMINE PARAMETERS FOR DETERMINING TRAVEL DIFFICULTY — S106

CREATE TD AREA ACCORDING TO THE PARAMETER — S108

DETERMINE TRAVEL DIFFICULTY VIEWED FROM A MOVING OBJECT — S110

CALCULATE TARGET DIRECTION AND TARGET SPEED OF THE MOVING OBJECT — S112

CALCULATE OUTPUT VALUE OF THE DYNAMICS MODEL OPERATING THE VEHICLE DYNAMICS MODEL — S114

CALCULATE BEHAVIOR OF THE MOVING OBJECT ACCORDING TO THE VEHICLE DYNAMICS MODEL — S116

UPDATE SIMULATION IMAGE — S118

LONG CYCLE

INTERMEDIATE CYCLE

SHORT CYCLE

19

# FIG.4

(a) ALL DATA

(b) CONNECTION INFORMATION
FOR EXTRACTED LANES

(c) CONNECTION INFORMATION
FOR EXTRACTED ROUTE

EP 1 569 186 A1

# FIG.5

TRAFFIC ENVIRONMENT DATABASE *(20)*

TARGET ROUTE SEARCHING UNIT *(50)*

RECOGNIZE TRAFFIC ENVIRONMENT *(52)*

LONG CYCLE

SELECT TRAFFIC LANE *(54)*

DETERMINE RESPONSE TO STOP SIGN *(56)*

PREDICT BEHAVIORS OF OTHER MOVING OBJECTS *(58)*

ESTIMATE SPEED LIMIT *(59)*

PRODUCE TD AREA BASED ON LANES *(60)*

PRODUCE TD AREA BASED ON STOP SIGN *(62)*

PRODUCE TD AREA BASED ON OTHER MOVING OBJECTS *(64)*

TRAVEL DIFFICULTY INTEGRATING UNIT *(66)*

EXTRACT TD AREAS WITHIN DIRECTIONAL VIEW *(68)*

EXTRACT TD AREAS WITHIN SPEED VIEW *(70)*

INTERMEDIATE CYCLE

PRODUCE APPARENT TD DISTRIBUTION ACCORDING TO DIRECTION *(72)*

PRODUCE APPARENT TD DISTRIBUTION ACCORDING TO SPEED *(74)*

DETERMINE TARGET DIRECTION *(76)*

DETERMINE TARGET SPEED *(78)*

VEHICLE DYNAMICS MODEL *(34)*

PRODUCE OPERATIONAL AMOUNT FOR STEERING WHEEL *(80)*

PRODUCE OPERATIONAL AMOUNT FOR ACCELERATOR AND BRAKE *(82)*

SHORT CYCLE

*(32)*

EP 1 569 186 A1

21

40

50 50
50 50

50 50
50 50

(a) LANE SECTION

OPPOSITE LANE
MEDIAN STRIPE
LANE

40 40

SELECT RIGHT TURN
LANE

NO LANE
SELECTION

SELECT LEFT
LINE

(b) LANE CONNECTION INFORMATION

(c) EXTRACTED LANE CONNECTION
INFORMATION

Fig. 6

EP 1 569 186 A1

Fig. 7

FIG.8

EP 1 569 186 A1

FIG.9

EP 1 569 186 A1

GG

100

DD

EE

FIG.10

SIGNAL

GG

JJ

100

DD

EE

EP 1 569 186 A1

# FIG.11

(a)PARKED CAR

CENTER LINE

100

FIG.12

100

(b) CAR TRAVELING IN THE SAME DIRECTION

CENTER LINE

(c) CAR TRAVELING IN THE OPPOSITE DIRECTION

ii

i

ii

i

i TRAVEL DIFFICULTY RANGE TO BE EXPANDED ACCORDING TO SPEED

ii TRAVEL DIFFICULTY RANGE TO BE EXPANDED ACCORDING TO WIDTH AND SIDE MARGIN

EP 1 569 186 A1

FIG.13

FIELD OF VIEW FOR
SPEED DECISION

(b)

(a)

100

FIELD OF VIEW FOR
DIRECTION DECISION

FIG.14

(A) (B) (C)

EE

DD
100

GG

FIG.15

APPARENT TRAVEL DIFFICULTY

HIGH

LOW

(VIRTUAL) LANE SEPARATING LINE

(A)

SELECTED DIRECTION

(B)

OPPOSITE VEHICLE

(C)

DIRECTION

LEFT ← → RIGHT

EP 1 569 186 A1

FIG.16

EP 1 569 186 A1

# FIG.17

# FIG.18

```
                                                    ⌐66
                    ┌──────────────────────────┐
                    │   TRAVEL DIFFICULTY      │
                    │   INTEGRATING UNIT       │
                    └──────────────────────────┘
                                 │
                                 ▼                  ⌐68
                    ┌──────────────────────────┐
                    │  EXTRACT TRAVEL DIFFICULTY│
                    │ AREAS WITHIN DIRECTIONAL VIEW│
                    └──────────────────────────┘
                                 │
                                 ▼                  ⌐72
                    ┌──────────────────────────┐
                    │  PRODUCE APPARENT TRAVEL │
                    │   DIFFICULTY DISTRIBUTION │
                    │   ACCORDING TO DIRECTION  │
                    └──────────────────────────┘
                                 │
                                 ▼                  ⌐76
                    ┌──────────────────────────┐           TO PRODUCE
                    │  DETERMINE TARGET DIRECTION│───────►  OPERATIONAL AMOUNT
                    └──────────────────────────┘           FOR STEERING WHEEL
                                 │                                80
                                 ▼                  ⌐84
                    ┌──────────────────────────┐
                    │  GENERATE TRAVEL DIFFICULTY│
                    │   ACCORDING TO SPEED      │
                    └──────────────────────────┘
                                 │
                                 ▼                  ⌐78
                    ┌──────────────────────────┐           TO PRODUCE
                    │  DETERMINE TARGET SPEED   │───────►  OPERATIONAL AMOUNT
                    └──────────────────────────┘           FOR ACCELERATION
                                                            AND BRAKE
                                                                82
```

## FIG.19

TD AREA SEARCHING
RANGE

FIELD OF VIEW FOR
DIRECTION DICISION

100

**European Patent Office**

**DECLARATION**

which under Rule 45 of the European Patent Convention shall be considered, for the purposes of subsequent proceedings, as the European search report

**Application Number**

EP 05 00 2536

| | |
|---|---|
| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (Int.Cl.7)**<br><br>G09B19/16<br>G09B9/05 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.
The problems which are addressed do not appear to require a technical, but rather an administrative/organisational, or business, solution. The implementation of this solution may include the use of generic technical features, however these do not interact to solve any overall technical problem but merely serve their well-known functions.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 2 June 2005 | Giemsa, F |